# EUROPÄISCHE PATENTANMELDUNG

(11) **EP 0 700 119 A2**
(43) Veröffentlichungstag der Anmeldung: **06.03.1996**
(21) Anmeldenummer: 95113652.2
(22) Anmeldetag: 31.08.1995
(51) Int. Cl.: H01R 4/24, H02G 3/12

(54) **Elektro-Installationsdose**

(30) Priorität: 01.09.1994 DE 4431148
(71) Anmelder: Burtz GmbH Industrievertretung, D-97318 Kitzingen/Main (DE)
(72) Erfinder: Burtz, Georg, D-97318 Kitzingen/Main (DE)
(74) Vertreter: Pöhner, Wilfried Anton, Dr.

(57) **Zusammenfassung**

Vorgeschlagen wird eine Elektro-Installationsdose unter Putz mit einem Einsatz in Form eines Schalters oder einer Steckdose odgl. und mit Verbindungselementen zum Anschließen des Einsatzes an die Adern elektrischer Leitungen, wobei die Verbindungselemente Klemmen (8) aus elektrisch leitendem Material sind, die aus zwei federnd elastischen, parallel zueinander verlaufenden Schenkeln (10) bestehen und zumindest jeweils eine innere Kante der Schenkel (10) als Schneide ausgebildet ist und daß sich die Schneiden (11) in geringem Abstand gegenüberstehen, so daß ein Spalt zwischen Ihnen vorhanden ist, in den jeweils eine Ader (9) der Leitungen eingeschoben ist.

## Beschreibung

Die Erfindung bezieht sich auf eine Elektro-Installationsdose unter Putz mit einem Einsatz in Form eines Schalters oder einer Steckdose odgl. und mit Verbindungselementen zum Anschließen des Einsatzes an die Adern elektrischer Leitungen.

Bei Unterputzsystemen werden Installationsdosen für Schalter und Steckdosen oder auch als Abzweigdosen nach Schaffung des entsprechenden Raumes im Mauerwerk in der Regel eingegipst oder -putzt. Mit Beendigung der Verputzarbeiten werden die eigentlichen Installationsarbeiten, d.h. das Durchziehen der Leitungen, sofern sie nicht unmittelbar im Putz verlegt sind, durch die verlegten Rohre sowie das Anschließen der Dosen und Schalter, vorgenommen. Die Adern der Leitungen werden dabei einerseits an die Kontaktstellen, d.h. Verbindungselemente, des Schalters bzw. der Steckdose angeschraubt und andererseits mit den Versorgungsadern über Lüsterklemmen verbunden. Nachteilig wirkt sich aus, daß das Anschließen sehr zeitaufwendig und damit personalintensiv ist. So müssen die Lüsterklemmen zunächst aufgeschraubt und die Adern abisoliert werden. Die abisolierte Ader wird dann in die Lüsterklemme eingeführt und schließlich verschraubt. Dieser Vorgang muß für alle Adern und für von beiden Seiten einer Lüsterklemme durchgeführt werden. Zudem müssen die Kabel relativ lang in der Dose sein, damit sie zum Verschrauben an der Lüsterklemme aus der Dose zumindest ein Stück weit herausgezogen werden können. Ein Verschrauben am Kabelansatz der Dose ist nicht nur umständlich, sondern nahezu unmöglich. Nach dem Einschieben des Einsatzes entsteht in der Installationsdose ein dichtes Kabelknäuel, das die Gefahr eines Kurzschlusses erheblich erhöht.

Demgegenüber hat sich die Erfindung zur Aufgabe gemacht, eine Elektro-Installationsdose mit einem Einsatz anzugeben, der die Befestigung der Adern erheblich vereinfacht und beschleunigt sowie eine Verkürzung der dazu benötigten Kabellänge gestattet.

Erfindungsgemäß wird die Aufgabe dadurch gelöst, daß die Verbindungselemente Klemmen aus elektrisch leitendem Material sind, die aus zwei federnd elastischen, parallel zueinander verlaufenden Schenkeln bestehen und zumindest jeweils eine innere Kante der Schenkel als Schneide ausgebildet ist und daß sich die Schneiden in geringem Abstand gegenüberstehen, so daß ein Spalt zwischen Ihnen vorhanden ist, in den jeweils eine Ader der Leitungen eingeschoben ist.

Die Installation mit der erfindungsgemäßen Elektro-Installationsdose erfolgt auf die Weise, daß Versorgungsleitungen durch die Dosen hindurchgeführt werden, ohne daß es erforderlich ist, daß sie in den Dosen aufgetrennt oder die einzelnen Adern abisoliert werden. Die einzelnen Adern sind jeweils in eine, vorzugsweise federnd elastische, Klemme einzuschieben, wobei die Isolierung der Adern von den Schneiden der Klemmen durchschnitten und somit eine elektrisch leitende Verbindung zwischen der Klemme und der Ader hergestellt wird. Der Spalt ist dabei so dimensioniert, daß die Schneide der Klemme ausreichend stark gegen die Ader drückt, so daß eine elektrische Verbindung sicher gewährleistet werden kann. Da jede Ader der durch die Dose durchgezogenen elektrischen Leitung in eine Klemme befestigt wird, muß folglich die Anzahl der Klemmen in der Dose mindestens so groß sein wie die Anzahl der Adern. Schließlich müssen vor dem Einschieben des Einsatzes in die Dose Verbindungsadern des Einsatzes in die Klemmen zu den entsprechenden Versorgungsadern eingesetzt werden, sofern der Einsatz nicht unmittelbar durch die Verbindungselemente kontaktiert wird oder, etwa an einen Schalter, Verbraucher anzuschließen sind. Es ist auch möglich noch weitere Abzweigungen von der Klemme vorzunehmen, welche ebenso wie die Adern eingeklemmt werden. Da die Klemme aus elektrisch leitendem Material ist, besteht zwischen den in die selbe Klemme eingesetzten Adern eine elektrische Verbindung.

Die Vorteile der Erfindung sind vor allen Dingen darin zu sehen, daß bei der Installation der Dose das umständliche Verschrauben der Adern eingespart wird, da sie lediglich in die Klemmen eingeschoben werden. Die Adern müssen dabei nicht abisoliert werden, da die Schneiden eine elektrische Verbindung durch die Isolierung hindurch herstellen. Ein weiterer Vorteil besteht darin, daß die Versorgungsleitung in der Dose nicht aufgetrennt werden muß, wodurch zum einen Arbeitszeit eingespart wird und zum anderen die benötigte Kabellänge reduziert wird sowie sich die Zahl von Kontaktstellen vermindert. Da ggf. auch die Verbindungsadern zu dem Einsatz kurz gehalten werden können, befindet sich in der Dose relativ wenig Kabel, wodurch einem Verknäuelen beim Einschieben des Einsatzes entgegengewirkt wird. Dem Einschieben wird somit ein geringerer mechanischer Widerstand entgegengesetzt und die Gefahr eines Kurzschlusses der Kabel in der Dose ist vermindert.

Die Schneiden der Klemmen sind vorzugsweise gewellt oder gezackt, so daß sich Aussparungen mit größerer Spaltbreite zwischen ihnen ergeben, welche so dimensioniert sind, daß eine darin eingeklemmte Ader noch einen ausreichenden elektrischen Kontakt zu den Schenkeln der Klemme hat. Der Vorteil besteht darin, daß die Adern in den Vertiefungen festsitzen und nicht verrutschen können. Da oft zwei Adern zusammengeschlossen werden, sollte jede Klemme mindestens zwei Vertiefungen aufweisen.

Zweckmäßigerweise sind die Klemmen an der Bodenseite der Installationsdose befestigt. Somit kann die Versorgungsleitung im hinteren Teil der Dose beispielsweise vertikal oder horizontal hindurchgeführt werden, wobei die einzelnen Adern aufgespreizt und in die Klemmen gesteckt werden. Alternativ ist es von Vorteil, die Klemmen am Einsatz zu befestigen, so daß die Notwendigkeit seiner Kontaktierung über Verbindungsadern entfällt. Als Befestigungsort bietet sich die Rück- d.h. Bodenseite des Einsatzes an, so daß die Klemmen bei dessen Einbringen in die Dose auf die Leitungen zu bewegt werden oder die Adern vorher etwas aus der Dose herausgezogen und in die Klemmen eingelegt werden können.

In einer Erweiterung der Erfindung ist auf die Klemmen mit bereits eingebrachten Adern jeweils eine Kappe aufgesetzt, wodurch die beiden Schenkel etwas zusammengepreßt werden und somit der elektrische Kontakt zwischen der Klemme und den eingesetzten Adern verbessert und ihr Herausgleiten verhindert wird.

Zweckmäßigerweise sind die Kappen aus elektrisch isolierendem Material, wodurch die Klemmen vor einem Kurzschluß geschützt werden und sich die Sicherheit erhöht, wenn bei spannungsbeaufschlagten Klemmen Arbeiten am Einsatz durchgeführt werden.

Das Aufstecken dieser Kappen ist besonders rasch vornehmbar, wenn bereits mehrere Kappen auf einem, zweckmäßig isolierenden, Verbindungssteg befestigt sind, so daß mit einem Handgriff zugleich mehrere Klemmen (vorzugsweise alle Klemmen einer Dose) mit einer Kappe versehen werden können. Steg und Kappen können als einstückiges Gußteil, vorzugsweise im Spritzguß aus Kunststoff, gefertigt sein.

Die Installation des Einsatzes gestaltet sich bei in der Installationsdose angeordneten Klemmen besonders einfach, wenn Verbindungsadern bereits fest mit dem Einsatz, z.B. einer Steckdose oder einem Schalter, verbunden sind und nicht erst angeschraubt werden müssen. Somit muß beim Verbinden der Adern nur noch das andere Ende der Verbindungsadern in die Klemmen gesteckt werden. Es ergibt sich dadurch die Möglichkeit einer zügigen Verbindung des Einsatzes mit der Klemme.

In einer bevorzugten Ausgestaltung der Erfindung sind Laschen zur Befestigung der Dose in der Wand vorgesehen. Diese Laschen haben im wesentlichen die Form einer ebenen Platte und werden z.B. mittels Nägeln oder Schrauben an der Wand unter Putz befestigt. Sie reichen in die Wandaussparung für die Installationsdose hinein und greifen in eine Nut an der Außenwand der Dose ein. Damit ein sicherer Halt der Dose gewährleistet ist, müssen Laschen zumindest an zwei gegenüberliegenden Außenseiten der Dose befestigt sein. Der Vorteil besteht darin, daß kein Eingipsen der Dose mehr notwendig ist, sondern lediglich die Laschen unter Putz anzubringen sind.

Damit der aus der Wand überstehende Teil der Installationsdose an die Stärke des aufzubringenden Putzes angepaßt werden kann, besitzen die Außenseiten zweckmäßig mehrere parallele Nuten, die einen unterschiedlichen Abstand zum Dosenrand aufweisen. Nun kann die Lasche je nach Putzstärke wahlweise in eine der Nuten einer Außenseite eingesetzt werden.

Im wesentlichen ist die Putzstärke dadurch nur in Stufen einstellbar. Um eine Erhöhung der Flexibilität zu erreichen, ist das in die Nut eingreifende Ende der Lasche einseitig dicker als die übrige Lasche ausgeführt, so daß ein Rand vorhanden ist, der über ihre Oberfläche hervorsteht. Je nachdem mit welcher Seite die Lasche an der Wand befestigt wird, zeigt der Überstand in Richtung der Wand oder von ihr weg. Es existieren somit zwei mögliche Ausrichtungen der Lasche, die einen etwas unterschiedlichen Abstand der eingesetzten Nut zur Wandkante zur Folge haben, wodurch eine Feinanpassung an die Putzstärke möglich ist. Das gleiche Funktionsprinzip ist auch durch ungleich große Überstände auf gegenüberliegenden Seiten der Lasche gegeben.

Eine andere Möglichkeit, diese Feineinstellung zu ermöglichen, besteht darin, den Rand der Lasche so auszugestalten, daß sein Querschnitt im wesentlichen die Form eines ungleichschenkligen Dreiecks hat. Die ungleichen Schenkel sind dabei die Seiten des Dreiecks, die den kantenfernen Winkel einschließen. Die Auffächerung der Kante durch die Dreiecksform ist dadurch in die beiden Richtungen senkrecht zur Laschenebene unterschiedlich, wodurch sich je nach Anbringung der Lasche zwei unterschiedliche Positionen zur Einbringung der Nut ergeben.

Oftmals werden mehrere Dosen an einer Stelle benötigt. So ist es z.B. gebräuchlich, mehrere Steckdosen nebeneinander anzuordnen oder Steckdose und Lichtschalter zu kombinieren. Die Installationsdosen weisen deswegen vorzugsweise Verbindungselemente auf, mit denen sie zusammengesteckt werden können. Diese Verbindungselemente können z.B. eine Nut-Feder-Verbindung darstellen.

Im Stande der Technik weisen die Einsätze seitlich abstehende Krallen auf, die durch Anziehen einer Schraube nach außen gegen die Installationsdose gedrückt wird. Bei einer bevorzugten Ausgestaltung der Erfindung sind die Krallen federnd, beispielsweise aus elastischem Material oder mit einer Feder versehen, wobei die Federkraft radial nach außen wirkt. Der Vorteil besteht darin, daß zur Befestigung des Einsatzes in der Installationsdose kein Festschrauben mehr erforderlich ist, sondern daß die Krallen selbständig gegen Dose pressen, so daß der Einsatz fest in der Dose sitzt.

Die Krallen sind an ihrem äußeren Ende vorzugsweise hahnenkammartig geformt, d.h. sie laufen am Ende nicht spitz aus sondern sind abgerundet, wobei an der Abrundung mehrere nach außen weisende, radial ausgerichtete Zacken angebracht sind. Durch diese hahnenkammartige Form der Kralle läßt sich der eingeschobene Einsatz auch nachträglich ausrichten und justieren, ohne daß die Kralle mit den Zacken von der Innenwand der Dose abgleitet und somit den Kontakt zu der Dose verliert.

Bei einer alternativen, vorteilhaften Ausgestaltung der Erfindung weisen die Krallen die Gestalt von Widerhaken auf, so daß sich die Einsätze mit geringem Widerstand in die Installationsdose einschieben lassen. Dagegen verhindern die entgegen der Einführrichtung federnd an der Dosenwandung anliegenden Haken ein Herausziehen des Einsatzes bei Zugbelastung.

Vorzugsweise finden Dosen mit quadratischem Querschnitt Verwendung, weil dadurch die Einsätze leichter einführbar sind. Die Einsätze können so eingeschoben werden, daß die Krallen diagonal in der Dose ausgerichet sind, also Richtung der Ecken des Quadrats weisen. Erst wenn der Einsatz bis zur gewünschten Tiefe in die Dose eingeführt ist, wird der Einsatz um 45° gedreht. Der Vorteil besteht darin, daß die Krallen beim Einführen noch nicht so dicht an der Wandung des Einsatzes anliegen müssen, wodurch der Einsatz leichter eingeführt werden kann, ohne daß die Krallen an der Innenseite des Gehäuses streifen. Nach dem Drehen des Einsatzes liegen die Krallen eng an der Dose an und pressen mit relativ großer Kraft gegen die Dosenwand.

Eine vorteilhafte Installationsdose weist ein hinreichendes Volumen auf, um beispielsweise unterschiedlich große Einsätze oder überschüssige Leitungslänge aufnehmen zu können. Um auch in diesem Fall ein rasches Einbringen des Einsatzes in präziser Ausrichtung zu gestatten, ist ein Tiefenanschlag zweckmäßig, der ein Fluchten mit dem vorderen Dosenrand gewährleistet. Dabei kann die exakte Position, die etwa bei über die Wand hervorstehenden Schaltern oder vertieft einzusetzenden Steckdosen geringfügig variieren kann, durch unterschiedliche Tiefenanschläge oder verschieden angeordnete Gegenflächen der Einsätze realisiert werden. Denkbar ist, den Tiefenanschlag als Bestandteil von Einsatz, Installationsdose oder der Kappe der Klemmen zu fertigen.

Das Einsetzen einer Ader in eine Klemme läßt sich durch die Verwendung eines Werkzeuges noch weiter vereinfachen und beschleunigen. Dieses Werkzeug besitzt zwei beabstandete Greifer, die über einen Steg miteinander verbunden sind. Zwischen den beiden Greifern wird die Ader straff gespannt und durch Bewegen des Werkzeugs in die Klemme eingeführt. Dabei wirkt sich vorteilhaft aus, daß die Ader während des Einführens in die Klemme nicht von Hand gespannt werden muß.

Zweckmäßigerweise ist am Steg ein Griff befestigt, wodurch die Ader außerhalb der Dose in das Werkzeug eingespannt und danach in die Dose zur Klemme geführt werden kann. Durch die Verlängerung ist es nicht notwendig, mit den Fingern in die Dose zu greifen.

Mit einem weiteren Werkzeug läßt sich das Einführen eines Einsatzes in die Installationsdose erleichtern. Das Werkzeug ist im wesentlichen ein Hohlzylinder und so geformt, z.B. mit rundem oder eckigem Querschnitt, daß es einen Einsatz mit an diesen sich anpressenden Krallen aufnehmen kann. Außerdem ist es so bemaßt, daß es in die Installationsdose einführbar ist. Zum Einbringen des Einsatzes in die Dose wird dieser zunächst in das Werkzeug eingesetzt und mit dem Werkzeug in die Dose eingeführt. Die Krallen liegen dabei an der Innenwandung des Hohlzylinders an. Danach wird das Werkzeug wieder ohne den Einsatz herausgezogen. Er wird dabei durch einen im Hohlzylinder beweglichen Kolben an der Rückführungsbewegung gehindert und aus dem Werkzeug herausgeschoben. Die Krallen spreizen sich auf und drücken schließlich gegen die Innenwand der Dose. Die erreichten Vorteile sind darin zu sehen, daß das notwendige Zusammenpressen der Krallen während des Einschiebens ohne ständigen aktiven Kraftaufwand erreicht wird. Wegen des schmalen Spalts zwischen der Dose und dem Einsatz sind andere Lösungen aufwendiger, z.B. ein Aufspreizen herkömmlicher Krallen durch das Anziehen von Schrauben. Ferner ist die Installation vor unsachgemäßer Manipulation durch Laien geschützt, da das Entfernen des Einsatzes nur mit dem erfindungsgemäßen Spezialwerkzeug möglich ist.

Eine Weiterbildung dieses Werkzeugs besitzt eine Anschlagskante, die beim Einführen eines Einsatzes an der Dose bzw. der Wand anschlägt, wenn sich der Einsatz in der richtigen Tiefe der Dose befindet. Der Anschlag ist vorzugsweise axial relativ zum Werkzeug verschiebbar und arretierbar, damit er an verschiedene Einsatztiefen anpaßbar ist.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Es zeigen in schematischer Darstellung:
- Figur 1: Schnitt durch eine Installationsdose mit Einsatz
- Figur 2: Vergrößerte Darstellung einer Klemme
- Figur 3: Schnitt durch eine Dose mit verlegten Versorgungsadern
- Figur 4: Ansicht einer eingesetzten Steckdose in Draufsicht
- Figur 5: Schnitt senkrecht zur Wandoberfläche durch eine Dosenbefestigung
- Figur 6: Schnitt durch eine Kralle eines Einsatzes
- Figur 7: Seitenansicht eines Werkzeuges zum Einsetzen einer Ader
- Figur 8: Vorderansicht eines Werkzeuges zum Einsetzen einer Ader
- Figur 9: Längsschnitt durch ein Werkzeug zum Einführen eines Einsatzes
- Figur 10: Schnitt durch einen Einsatz im Bereich der Krallen in Draufsicht
- Figur 11: Querschnitte durch einen Einsatz im Bereich der Krallen

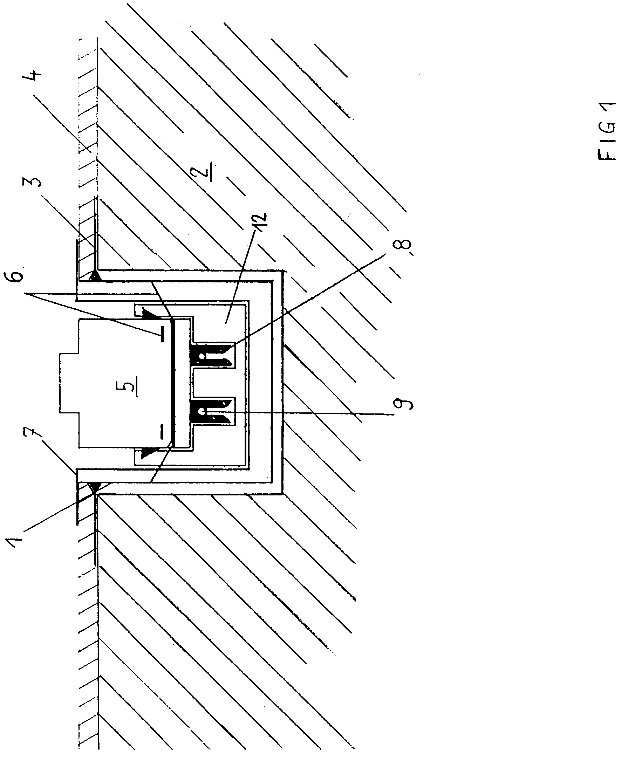

Figur 1 zeigt einen Schnitt durch eine erfindungsgemäße Elektro-Installationsdose (1), die in eine Aussparung einer Wand (2) eingesetzt ist. Sie ist mit an der Wand (2) befestigten Laschen (3) verbunden, die unter Putz (4) verlaufen und in die Installationsdose (1) eingreifen, die ihrerseits über die Wand (2) übersteht und mit der Putzschicht (4) bündig abschließt. In der Elektro-Installationsdose (1) befindet sich ein Einsatz (5) (in diesem Fall ein Schalter), an dem links und rechts jeweils federnd aufgespreizte Krallen (6) in Gestalt von Widerhaken befestigt sind, welche gegen die Innenwand der Installationsdose (1) drücken. Ein Tiefenanschlag (7), der auf dem vorderen Rand der Installationsdose (1) aufliegt, gewährt dabei eine präzise Ausrichtung des Einsatzes (5) fluchtend zur Oberfläche des Putzes (4). An der Bodenseite des Einsatzes (5) sind Klemmen (8) befestigt, in die die Adern (9) von Leitungen eingeschoben und dort festgeklemmt sind. Die Klemmen (8) sind im wesentlichen zylinderförmig und so am Einsatzboden angebracht, daß die Zylinderachse senkrecht auf dem Boden steht. Denkbar ist, etwa zur Erzeugung einer Leitungsverzweigung, weitere Adern (9) in eine Klemme einzubringen. Eine Kappe (12), die als Aufnahme des gesamten Einsatzes (5) ausgebildet und mit diesem verhakt ist, schließt die Klemmen (8) bodenseitig ab, so daß ein Herausgleiten der Adern ausgeschlossen ist, und bietet dem Einsatz (5) im Tiefenanschlag (7) einen festen Halt. Denkbar ist weiterhin, daß die Kappe (12) eng anliegende Führungen für die Adern (9) umfaßt, die diese beim Einschieben des Einsatzes (5) in geeigneter Position fixieren, um eine sichere Kontaktierung zu gewährleisten.

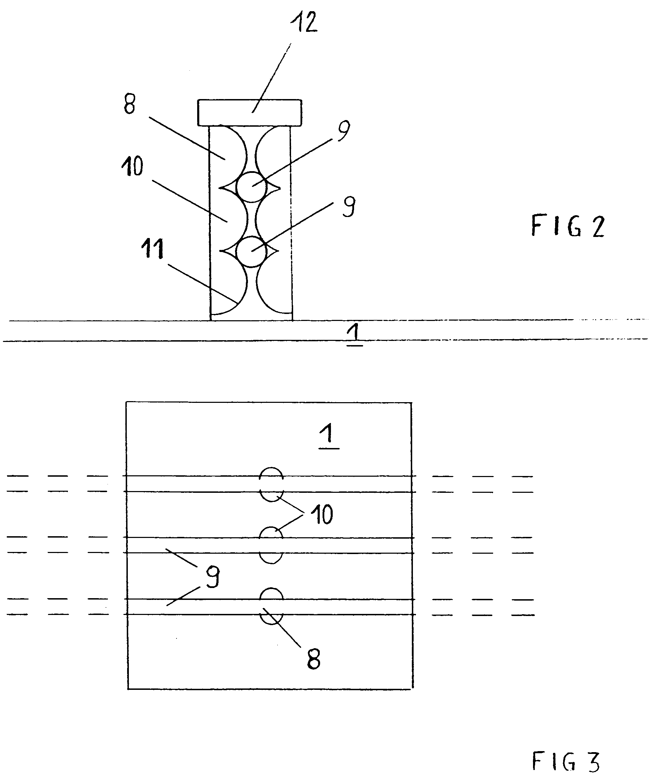

In Figur 2 ist eine Klemme (8) vergrößert dargestellt, die im Gegensatz zu der in Figur 1 gezeigten Ausführung auf dem Boden der Installationsdose (1) angebracht ist. Sie besteht aus zwei Schenkeln (10), deren Kanten gewellt sind, wobei sich jeweils zwei Kanten der beiden Schenkel (10) gegenüberstehen. Insgesamt ergibt sich für die Klemme (8) ungefähr eine hohlzylindrische Form mit kreisringförmiger Grundfläche mit einem axialen Schlitz, der die Klemme (8) in die beiden Schenkel (10) teilt, wobei die Schlitzweite wegen der Welligkeit der Kanten variiert. Die Kanten sind als Schneiden (11) ausgeführt, so daß die Isolierung einer in den Schlitz eingeführten Ader (9) aufgetrennt und somit eine elektrische Verbindung zur Klemme (8) hergestellt wird. Die eingeführten Adern (9) befinden sich in Aussparungen, d.h. an den Stellen, an denen die Spaltbreite am größten ist. Der Abstand zwischen den Schenkeln (10) und ihre Welligkeit ist so dimensioniert, daß die Adern (9) nicht verrutschen und daß der elektrische Kontakt zur Klemme (8) stets gewährleistet ist. Am oberen Ende ist eine Kappe (12) auf die Klemme (8) aufgesetzt, die die beiden Schenkel (10) etwas zusammenpreßt und dadurch den elektrischen Kontakt verbessert.

In Figur 3 ist ein bevorzugter Verlauf der Adern (9) dargestellt, die zur Spannungsversorgung der Installationsdose (1) dienen. Sie verlaufen von links nach rechts durch seitliche Öffnungen in der Installationsdose (1) und sind in der Mitte jeweils zwischen die beiden Schenkel (10) einer Klemme (8) eingeklemmt. Durch diese zweckmäßige Führung der Adern (9) können diese besonders einfach und ohne großen Installationsaufwand durch benachbarte, insbesondere durch direkt aneinander anliegende Installationsdosen (1) geführt werden, ohne aufgetrennt oder abisoliert werden zu müssen.

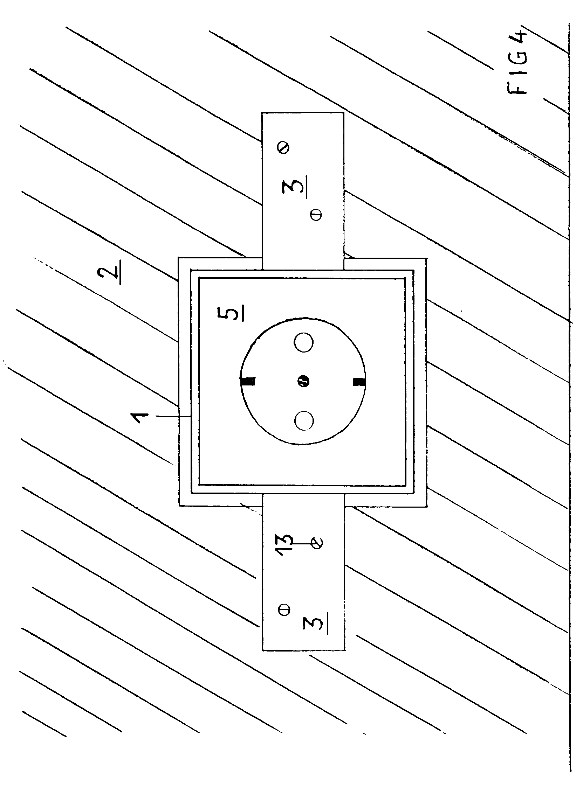

In Figur 4 ist ein fertig installierter Einsatz (5) (in diesem Fall eine Steckdose) in Draufsicht dargestellt. Lediglich der Putz (4) ist noch nicht aufgebracht, so daß die Laschen (3) noch sichtbar sind, welche mittels zweier Schrauben (13) an der Wand (2) befestigt sind. Die Laschen (3) ragen in die Aussparung in der Wand (2) hinein und greifen in die eingesetzte Elektro-Installationsdose (1).

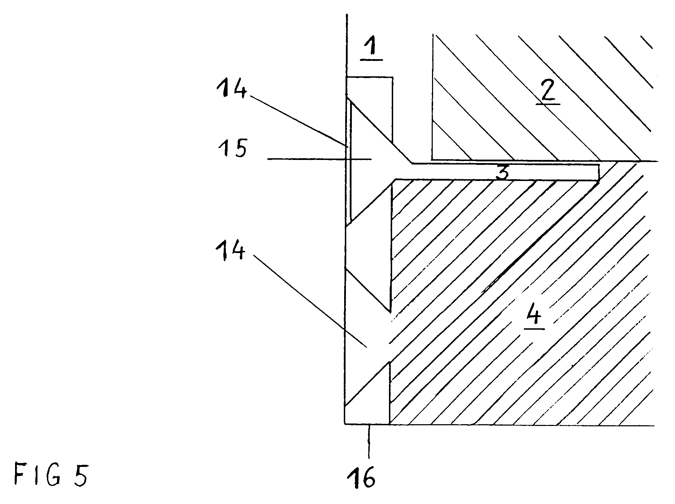

In Figur 5 ist eine Verbindung zwischen einer Lasche (3) und der Installationsdose (1) im Schnitt senkrecht zur Wand (2) dargestellt. Die Installationsdose (1) weist zwei senkrecht zur Zeichenebene verlaufenden und benachbarte Nuten (14) auf, in die ein verbreitertes Ende (15) der Lasche (3) eingeschoben ist. Das verbreiterte Ende (15) hat in diesem Querschnitt ungefähr die Form eines Dreiecks, vom dem die Lasche (3) als Spitze aus der Nut (14) herausragt. Die von dieser Spitze ausgehenden Seiten des Dreiecks haben eine verschiedene Länge, so daß das Dreieck ungleichschenklig ist. Durch das Einführen der Lasche (3) in verschiedene Nuten (14) kann der Abstand zwischen dem vorderen Dosenrand (16) und der Wand (2) variiert werden, so daß er der Dicke des später aufgebrachten Putzes (4) entspricht. Die Lasche (3) kann so an der Wand (2) befestigt werden, daß sie an ihr entweder mit der einen oder der anderen Seite anliegt. Eine Seitenänderung verändert auch die Lage des verbreiterten Endes (15), da die beiden ungleichen Schenkel des Dreiecks ihre Position tauschen. Somit ist ein fluchtender Abschluß des vorderen Dosenrandes (16) und der Wand (2) möglich.

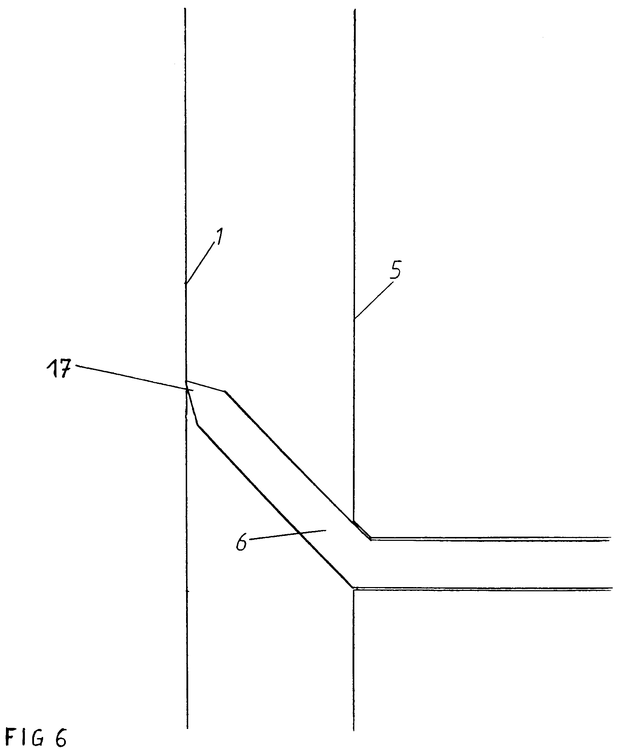

Die Figur 6 zeigt die vergrößerte Darstellung einer am Einsatz (5) befestigten Kralle (6), welche mit der Dose (1) einen spitzen Winkel einschließt und als Widerhaken wirkt. Die Federkraft der elastischen Kralle (6) wirkt vom Einsatz (5) weg. Das äußere Ende der Kralle (6) ist als Spitze (17) ausgebildet, so daß sich der Einsatz (5) zwar mit geringem Widerstand nach unten einschieben läßt, aber ein Herausziehen nach oben durch Eingriff der Spitze (17) in die Wandung der Installationsdose (1) verhindert wird.

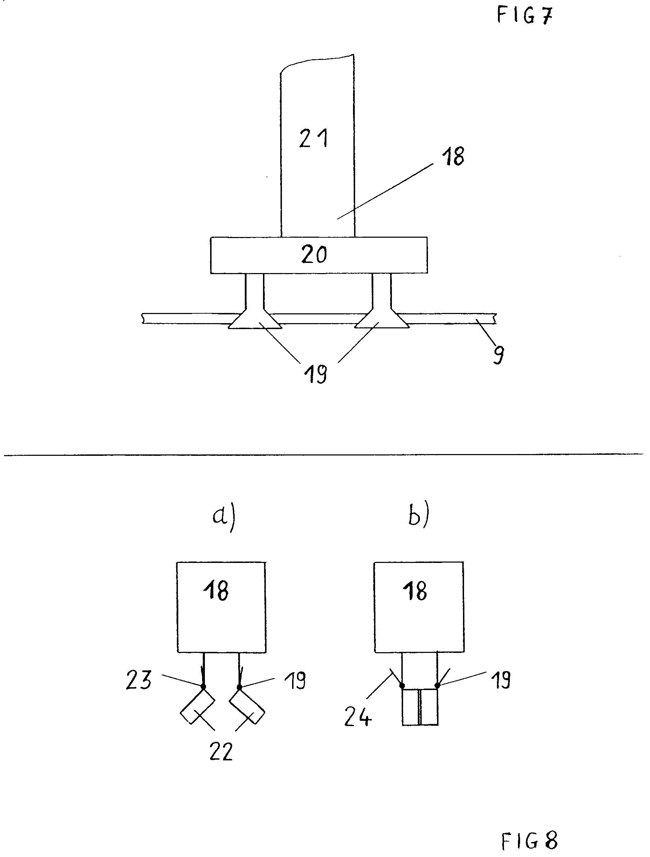

Die Figur 7 zeigt ein Werkzeug (18) zum Einführen einer Ader (9) in eine Klemme (8). Es besteht aus zwei Greifern (19), zwischen die eine Ader (9) einspannbar ist und die an einem gemeinsamen Steg (20) befestigt sind. Senkrecht zum Steg (20) an der den Greifern (19) entgegengesetzten Seite ist ein Griff (21) angebracht.

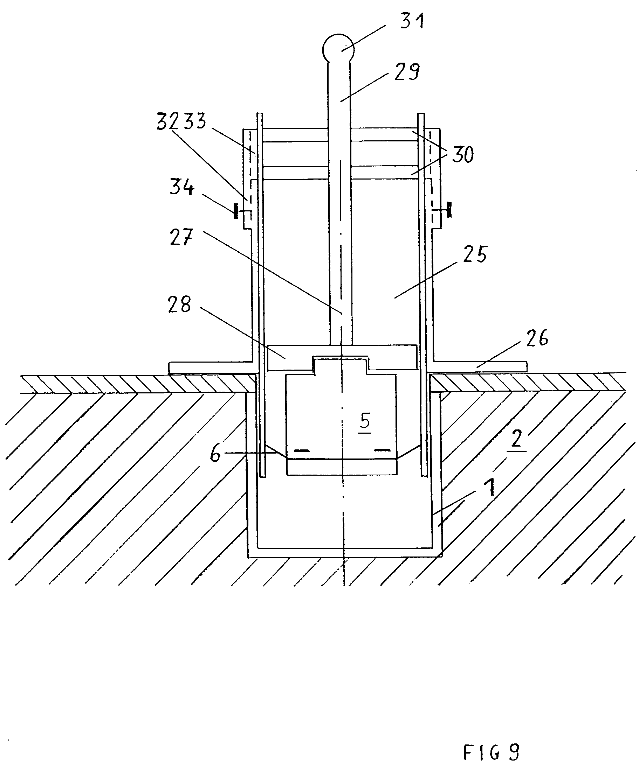

Die Figur 8 zeigt das Werkzeug (18) in Vorderansicht, so daß der in Figur 7 linke Greifer (19) sichtbar ist. Der Greifer (19) ist in der Teilfigur a in geöffneter Stellung und in der Teilfigur b in Schließstellung gezeichnet. Er unterscheidet sich im Prinzip nicht von bekannten Klammern und ist deswegen nur schematisch gezeichnet. Er weist Anpreßbacken (22) auf, die in Schließstellung aneinander anliegen und über ein Scharnier (23) mit Betätigungsschenkeln (24) verbunden sind.

In Figur 9 ist ein Werkzeug (25) zum Einbringen eines Einsatzes (5) in eine Installationsdose (1) dargestellt. Das Werkzeug (25) hat die Form eines Hohlzylinders mit kreisringförmiger Grundfläche. In dem Werkzeug (25) befindet sich ein Einsatz (5), der mit seinen Krallen (6) gegen die Innenwand des Werkzeuges (25) preßt. Das Werkzeug (25) mit dem Einsatz (5) ist soweit in die Dose (1) eingeführt, daß der Einsatz (5) mit der Wand (2) bündig abschließt. Das Werkzeug (25) schlägt in dieser Position mit zwei seitlich abstehenden Anschlagskanten (26) an der Wand (2) an, welche mit axial in jeweils einer Führung (32) verlaufenden Schienen (33) verbunden sind. Die Schienen (33) sind mit Schrauben (34) in den Führungen (32) arretierbar. In dem Hohlzylinder befindet sich ein axial beweglicher Kolben (27) mit einer senkrecht zur Zylinderachse verlaufenden und den Querschnitt des Hohlzylinders nahezu ausfüllenden Platte (28) und einem an der Platte (28) befestigten und koaxial zum Zylinder verlaufenden Stift (29), der über zwei radial verlaufende Halterungen (30) am wandfernen Ende aus dem Hohlzylinder herausgeführt ist und mit einem Knauf (31) abschließt.

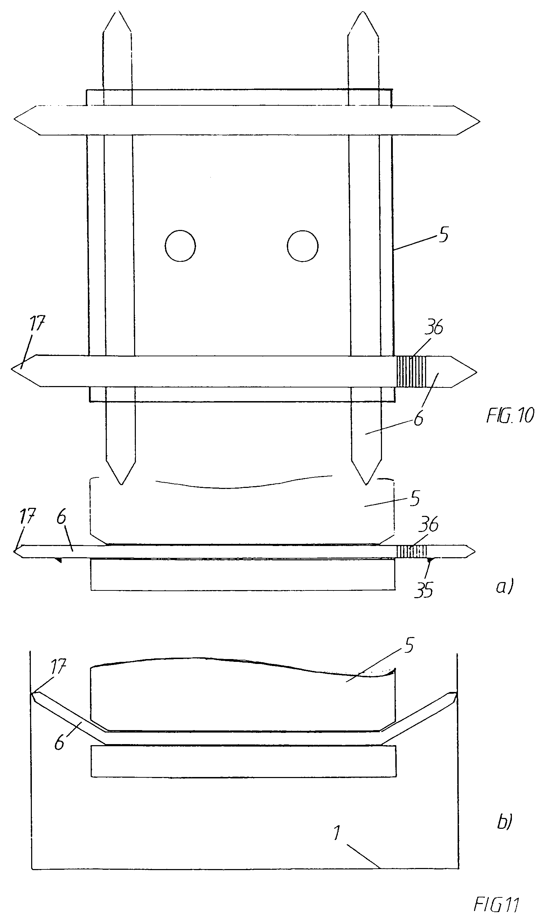

Die Abbildung der Figuren 10 und 11 gibt eine vorteilhafte Ausgestaltung der als Widerhaken wirkenden Krallen (6) in Form durchgehender, beidseitig mit Spitzen (17) versehener Laschen wieder, die in Gestalt eines Doppelkreuzes in den Einsatz (5) eingelegt sind. Derart geformte Laschen lassen sich auf einfache Weise und mit geringen Kosten fertigen, z.B. im Kunststoff-Spritzguß. Die vor dem Einbringen (Figur 11a) senkrecht über die seitliche Oberfläche des Einsatzes (5) hervorstehenden Krallen (6) biegen sich im eingeschobenen Zustand (Figur 11b) entgegen der Einschubrichtung zurück, so daß die Funktion als Widerhaken gegeben ist. Ist eine Ausrichtung des Einsatzes (5) in der Installationsdose (1) erforderlich, etwa um geringe Einbaufehler auszugleichen, lassen sich die laschenartigen Krallen (6) in ihrer Längsrichtung im Einsatz (5) verschieben, wobei eine Verschiebung paralleler Laschen um unterschiedliche Beträge auch eine Schrägstellung des Einsatzes (5) gestattet. Markierungen (36), beispielsweise im Abstand von je 1 mm, erleichtern die Einstellung der Krallen (6) auf den vorgesehenen Überstand und sind speziell dann von Vorteil, wenn Einsätze (5) in miteinander verbundenen Installationsdosen (1) in gleicher Ausrichtung einzustellen sind. Dabei verhindern Erhöhungen (35), daß die laschenartige Kralle (6) auf einer Seite vollständig in den Einsatz (5) hereingezogen wird, um ein beidseitiges Anliegen in der Installationsdose (1) zu gewährleisten.

## Patentansprüche

1. Elektro-Installationsdose unter Putz mit einem Einsatz in Form eines Schalters oder einer Steckdose odgl. und mit Verbindungselementen zum Anschließen des Einsatzes an die Adern elektrischer Leitungen, **dadurch gekennzeichnet**, daß die Verbindungselemente Klemmen (8) aus elektrisch leitendem Material sind, die aus zwei federnd elastischen, parallel zueinander verlaufenden Schenkeln (10) bestehen und zumindest jeweils eine innere Kante der Schenkel (10) als Schneide ausgebildet ist und daß sich die Schneiden (11) in geringem Abstand gegenüberstehen, so daß ein Spalt zwischen Ihnen vorhanden ist, in den jeweils eine Ader (9) der Leitungen eingeschoben ist.

2. Installationsdose nach Anspruch 1, **dadurch gekennzeichnet**, daß die Klemmen (8) federnd elastisch sind.

3. Installationsdose nach Anspruch 1 oder 2, **dadurch gekennzeichnet**, daß die Schneiden (11) so gewellt oder gezackt sind, daß der Spalt zwischen ihnen Aussparungen mit vergößerter Spaltbreite aufweist.

4. Installationsdose nach einem der vorhergehenden Ansprüche, **dadurch gekennzeichnet**, daß die Klemmen (8) an der Bodenseite der Installationsdose (1) oder des Einsatzes (5) befestigt sind, so daß der Spalt im wesentlichen senkrecht auf der Bodenseite steht.

5. Installationsdose nach einem der vorhergehenden Ansprüche, **dadurch gekennzeichnet**, daß auf dem offenen Ende der Klemme (8) eine Kappe (12) in axialer Richtung aufgesteckt ist, die derart geformt ist, daß sie die beiden Schenkel (10) der Klemme (8) etwas zusammenpreßt.

6. Installationsdose nach Anspruch 5, **dadurch gekennzeichnet**, daß die Kappe (12) aus elektrisch isolierendem Material ist.

7. Installationsdose nach einem der Ansprüche 5 oder 6, **dadurch gekennzeichnet**, daß mehrere Kappen (12) auf einem Verbindungssteg befestigt sind, und daß der Abstand der Kappen (12) untereinander den Abständen der Klemmen (8) in der Installationsdose (1) entspricht.

8. Installationsdose nach einem der vorhergehenden Ansprüche, **dadurch gekennzeichnet**, daß Verbindungsadern des Einsatzes (5) mit den Klemmen (8) unlösbar am Einsatz (5) befestigt sind.

9. Installationsdose nach einem der vorhergehenden Ansprüche, **dadurch gekennzeichnet**, daß die Installationsdose (1) an zwei gegenüberliegenden Außenseiten jeweils eine zu der Wand (2) parallele Nut (14) aufweist, in die eine auf der Wand (2) unter Putz (4) befestigte Lasche (3) eingesetzt ist, wobei die Nuten (14) der verschiedenen Außenseiten den gleichen Abstand zum vorderen Dosenrand (16) aufweisen.

10. Installationsdose nach Anspruch 9, **gekennzeichnet durch** mehrere Nuten (14) je Außenseite, wobei der Abstand der Nuten (14) einer Außenseite zum Dosenrand (16) verschieden ist.

11. Installationsdose nach einem der Ansprüche 9 oder 10, **dadurch gekennzeichnet**, daß das in die Nut (14) eingesetzte Ende (15) der Lasche (3) eine einseitige oder um unterschiedliche Beträge über die Oberfläche der Lasche (3) hervorstehende Verdickung aufweist.

12. Installationsdose nach einem der Ansprüche 9 bis 11, **dadurch gekennzeichnet**, daß das in die Nut (14) eingesetzte Ende (15) der Lasche (3) einen Querschnitt in Form eines ungleichschenkligen Dreiecks hat.

13. Installationsdose nach einem der vorhergehenden Ansprüche, **dadurch gekennzeichnet**, daß die Installationsdosen (1) seitliche Verbindungselemente aufweisen, mit deren Hilfe sie zusammengesteckt werden können.

14. Installationsdose nach einem der vorhergehenden Ansprüche, **dadurch gekennzeichnet**, daß der Einsatz (5) seitlich federnd aufgespreizte Krallen (6) aufweist, die in der Installationsdose (1) eingepreßt sind.

15. Installationsdose nach Anspruch 14, **dadurch gekennzeichnet**, daß die Krallen (6) an ihrem äußeren Ende hahnenkammartig geformt sind.

16. Installationsdose nach Anspruch 14, **dadurch gekennzeichnet**, daß die Krallen (6) die Gestalt von Widerhaken aufweisen, die entgegen der Einschubrichtung des Einsatzes (5) in die Installationsdose (1) an deren Wandung anliegen.

17. Installationsdose nach einem der vorhergehenden Ansprüche, **gekennzeichnet durch** einen quadratischen Querschnitt.

18. Installationsdose nach einem der vorhergehenden Ansprüche, **dadurch gekennzeichnet**, daß die Installationsdose (1) mit einem Tiefenanschlag (7) versehen ist, an dem der Einsatz (5) unmittelbar oder über die Kappe (12) anliegt, wenn er mit dem vorderen Dosenrand (16) fluchtet.

19. Werkzeug zum Einbringen einer Ader in die Klemme einer Installationsdose nach einem der vorhergehenden Ansprüche, **dadurch gekennzeichnet**, daß das Werkzeug (18) aus zwei über einem Steg (20) verbundenen Greifern (19) besteht, zwischen die eine Ader (9) einklemmbar ist.

20. Werkzeug nach Anspruch 19, **dadurch gekennzeichnet**, daß am Steg (20) ein im wesentlichen senkrecht zum Steg (20) verlaufender Griff (21) angebracht ist.

21. Werkzeug zum Einsetzen eines Einsatzes in die Installationsdose nach einem der Ansprüche 14 bis 18, **gekennzeichnet durch** die Form eines Hohlzylinders, dessen Außendurchmesser etwas kleiner als die Innenmaße der Installationsdose (1) ist und dessen Innendurchmesser dem Einsatz (5) mit angepreßten Krallen (6) entspricht und einen im Hohlzylinder axial bewegbaren Kolben (27) aufweist, der die innere Querschnittsfläche des Werkzeugs (25) so verringert, daß der Einsatz (5) am Kolben (27) nicht vorbeiführbar ist.

22. Werkzeug nach Anspruch 21, **dadurch gekennzeichnet**, daß das Werkzeug (25) außenseitig eine axial verschiebbare und arretierbare Anschlagskante (26) aufweist, deren äußere Abmessungen größer als die Innenmaße der Installationsdose (1) sind.
